# EUROPEAN PATENT SPECIFICATION

(11) **EP 3 255 544 B1**
(45) Date of publication and mention of the grant of the patent: **31.07.2019**
(21) Application number: 16305673.2
(22) Date of filing: 08.06.2016
(51) Int. Cl.: G06F 9/48, G06F 9/455

(54) **INTERRUPT CONTROLLER**
UNTERBRECHUNGSSTEUERGERÄT
CONTRÔLEUR D'INTERRUPTION

(43) Date of publication of application: 13.12.2017
(73) Proprietor: Virtual Open Systems, 38000 Grenoble (FR)
(72) Inventor: CHAPPUIS, Kevin, 38000 Grenoble (FR); PAOLINO, Michele, 38000 Grenoble (FR)
(74) Representative: Cabinet Beaumont

(56) References cited:
- US-A- 5 313 640
- US-A- 5 802 350
- US-A- 5 862 389
- US-A1- 2008 294 825
- US-A1- 2009 013 119
- US-A1- 2016 098 289

## Description

The work leading to this invention has received funding from the European Union Seventh Framework Programme FP7/2007-2013 and Horizon 2020 Programme H2020/2014-2020 under grant agreements n°610640 (DREAMS), n°687632 (DREDBOX) and n°761557 (NGPaaS).

### FIELD

The present disclosure relates to the field of compute nodes providing an execution environment for virtual machines, and in particular to an interrupt controller of a compute node.

### BACKGROUND

A compute node is a combination of hardware resources, including one or more processing devices, memory and networking circuits, as well as a software module known as a hypervisor. The hypervisor is used to support a plurality of virtual machines, each for example being associated with a different operating system. A compute node provides a single execution environment in which more than one virtual machine may be executed.

It has been proposed to use the hypervisor of a compute node to virtualise both an RTOS (real-time operating system) and a GPOS (general purpose operating system) on a same platform. For certain applications where human life depends on the efficient functioning of the RTOS there are strict operating constraints. For example, in the automotive sector, the RTOS is used to drive the braking system, electric-assistance steering, advanced driver assistance systems, etc., and the ISO standard ISO-26262 requires an RTOS boot time of less that around 60 ms. A difficulty of using a hypervisor in such applications is that, before the virtual RTOS can be launched, the hosted hypervisor should be up and running, which is not compatible with the low boot time requirements.

A further difficulty in the virtualization of RTOS and GPOS on a same platform is interrupt management. Indeed, in order to meet the strict constraints imposed by certain sectors, the system should be capable of processing and routing certain interrupts within a short time limit.

US Patent US5802350 relates to a system and method for allowing different operating systems to be utilised in a multiprocessing system.

US Patent application published as US2008/0294825 relates to a virtualized computer system in which a guest operating system runs on a virtual machine of a virtualized computer system, and describes a computer-implemented method of handling interrupts.

### SUMMARY

It is an aim of embodiments of the present description to at least partially address one or more difficulties in the prior art. Embodiments relate only to claimed combinations of features. In the following, when the term "embodiment" relates to unclaimed combinations of features, said term has to be understood as referring to examples of the present invention.

According to one aspect, there is provided a compute node comprising: one or more processors; one or more memory devices storing software enabling virtual processing resources of the one or more processors and virtual memory to be assigned to support: a first operating environment supporting a first operating system and one or more virtual machines; a second operating environment supporting a real-time operating system; and a secure monitor layer providing a bridge between the first and second operating environments; and an interrupt controller configured to provide an interface between a plurality of physical interrupt lines from one or more peripheral devices and at least two interrupt inputs of each of the one or more processors, characterized in that the interrupt controller is configured to generate, on the at least two interrupt inputs: interrupts of a first type destined for the first operating environment; interrupts of a second type destined for the second operating environment; and interrupts of a third type destined for the secure monitor layer.

According to one embodiment, the one or more processors comprise: a first banked register comprising a plurality of system registers and a plurality of general purpose registers associated with the first operating environment; and a second banked register comprising a plurality of system registers and a plurality of general purpose registers associated with the second operating environment.

According to one embodiment, the secure monitor layer is configured to implement a transition from the first operating environment to the second operating environment by activating the second banked register, and to perform a transition from the second operating environment to the first operating environment by activating the first banked register.

According to one embodiment, the transition from the first operating environment to the second operating environment, by activating the second banked register, is performed in response to an interrupt event of the second type and the transition from the second operating environment to the first operating environment, by activating the first banked register, is performed in response to an interrupt event of the first type.

According to one embodiment, the interrupt controller is configured to provide an interface between a plurality of physical interrupt lines from one or more peripheral devices and three interrupt inputs of the one or more processors.

According to one embodiment, the interrupts of the first type are provided on a first of the interrupt inputs; the interrupts of the second type are provided on a second of the interrupt inputs; and the interrupts of the third type are provided on a third of the interrupt inputs.

According to one embodiment, the interrupt controller is configured to encode the interrupts of the first, second and third types on first and second interrupt inputs of the one or more processors.

According to one embodiment, the interrupt controller is configured to generate: the interrupt of the first type by applying a first voltage state to the first interrupt input and a second voltage state to the second interrupt input; the interrupt of the second type by applying the second voltage state to the first interrupt input and the first voltage state to the second interrupt input; and the interrupt of the third type by applying the first or second voltage state to both of the first and second interrupt inputs.

According to one embodiment, the interrupt controller is configured to selectively mask interrupts of at least one of the first, second and third interrupt type.

According to a further aspect, there is provided a method of routing interrupts comprising: receiving interrupts by an interrupt controller of a compute node comprising: one or more processors; one or more memory devices storing software enabling processing resources of the one or more processors and memory to be assigned to support: a first operating environment supporting a first operating system and one or more virtual machines; a second operating environment supporting a real-time operating system; and a secure monitor layer providing a bridge between the first and second operating environments; and generating by the interrupt controller interrupts on at least two interrupt inputs of each of the one or more processors, the interrupts comprising: interrupts of a first type destined for the first operating environment; interrupts of a second type destined for the second operating environment; and interrupts of a third type destined for the secure monitor layer.

According to one embodiment, the interrupts of the first type are provided by the interrupt controller on a first of the interrupt inputs; the interrupts of the second type are provided by the interrupt controller on a second of the interrupt inputs; and the interrupts of the third type are provided by the interrupt controller on a third of the interrupt inputs.

According to one embodiment, the method further comprises encoding, by the interrupt controller, the interrupts of the first, second and third types on first and second interrupt inputs of the one or more processors.

According to one embodiment, encoding the interrupts of the first, second and third types on the first and second interrupt inputs comprises generating: the interrupt of the first type by applying a first voltage state to the first interrupt input and a second voltage state to the second interrupt input; the interrupt of the second type by applying the second voltage state to the first interrupt input and the first voltage state to the second interrupt input; and the interrupt of the third type by applying the first or second voltage state to both of the first and second interrupt inputs.

According to one embodiment, the method further comprises defining, by the interrupt controller, at least one interrupt of the third type as being unmaskable.

According to a further aspect, there is provided a computer readable medium storing computing instructions adapted to implement, when executed by a processing device, the above method.

### BRIEF DESCRIPTION OF THE DRAWINGS

The foregoing and other features and advantages will become apparent from the following detailed description of embodiments, given by way of illustration and not limitation with reference to the accompanying drawings, in which:
Figure 1 schematically illustrates a compute node supporting a plurality of virtual machines according to an example embodiment;
Figure 2 schematically illustrates a dual-compartment compute node according to an example embodiment of the present disclosure;
Figure 3 schematically illustrates a hardware platform and software components implementing the compute node of Figure 2 according to an example embodiment of the present disclosure;
Figure 4 schematically illustrates an example of interrupt routing that has been proposed;
Figure 5 schematically illustrates interrupt routing in a compute node according to an example embodiment of the present disclosure;
Figures 6A and 6B schematically illustrate examples of interrupt routing in the embodiment of Figure 5;
Figure 7A schematically illustrates an interrupt controller according to an example embodiment;
Figure 7B schematically illustrates interrupt management in a compute node according to an example embodiment of the present disclosure;
Figure 7C schematically illustrates an interrupt interface according to an example embodiment of the present disclosure;
Figure 7D schematically illustrates an interrupt interface according to a further example embodiment of the present disclosure;
Figure 8 schematically illustrates the interrupt controller of Figures 7A to 7D in more detail according to an example embodiment of the present disclosure; and
Figure 9 is a flow diagram illustrating operations in a method of interrupt management according to an example embodiment of the present disclosure.

### DETAILED DESCRIPTION

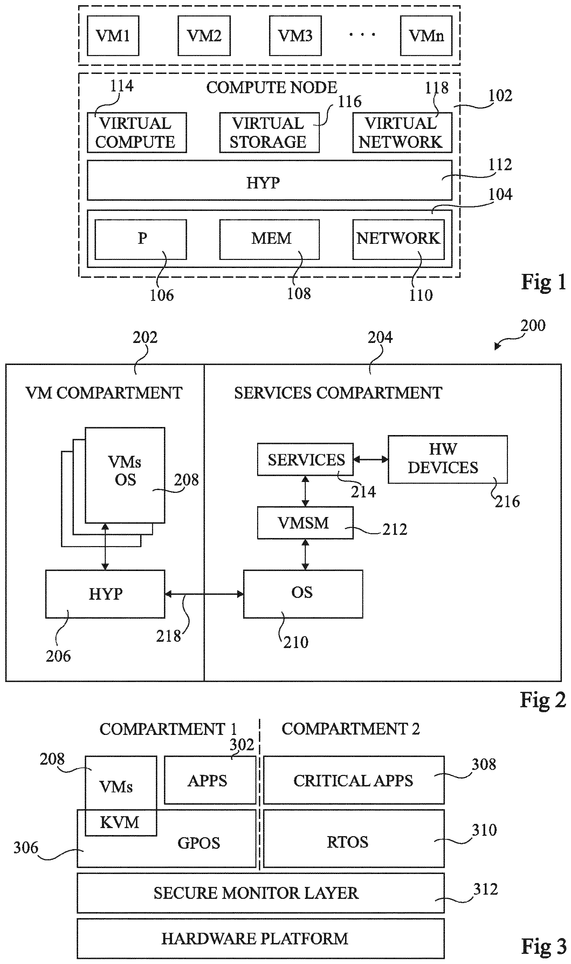

Figure 1 schematically illustrates a compute node 102 supporting a plurality of virtual machines VM1 to VMn according to an example embodiment. As illustrated, the compute node 102 for example comprises hardware components 104, including one or more processors 106, memory devices 108, and networking circuits 110. Furthermore, the memory devices 108 for example store software including an operating system providing the hypervisor 112, which supports and enables the virtual machines to execute. Indeed, the hypervisor for example supports a virtual compute module 114, which assigns processing functions to the virtual machines, a virtual storage module 116, which assigns memory space to the virtual machines, and a virtual network module 118, which enables the virtual machines to access the network hardware 110.

Figure 2 schematically illustrates a dual-compartment compute node 200 according to an example embodiment. Such a compute node is for example described in more detail in the PCT application assigned the application filing number PCT/EP2016/055951 (hereafter PCT' 951) filed on March 18, 2016. The dual-compartment compute node 200 is for example implemented based on the hardware of Figure 1, with some further hardware devices and a hardware partition as will be described in more detail below.

The dual-compartment compute node 200 comprises a compartment 202, which will be referred to herein as a virtual machine compartment, and which supports a plurality of virtual machines. The dual-compartment compute node 200 also comprises a services compartment 204, which for example provides a protected execution environment for certain services such as real time capabilities, security applications, hardware acceleration devices, or the like.

In particular, the virtual machine compartment 202 for example comprises software implementing the hypervisor 206, and the plurality of virtual machines 208, each for example being associated with a different operating system. The hypervisor 206 and the virtual machines 208 are for example implemented using a general purpose operating system (GPOS), such as Linux KVM (Kernel-based Virtual Machine).

The services compartment 204 for example comprises an operating system 210, which will be referred to herein as a "full-fledged" operating system, implying that it for example permits a standard instruction set, providing a broad range of capabilities. This is for example a real-time operating system (RTOS). The operating system 210 for example communicates with a virtual machine services manager 212, which is a software module that controls an interface between the services provided by the service compartment and the virtual machines 208 of the VM compartment. For example, the virtual machine services manager 212 stores data related to the services, the virtual machines, and the hypervisor, and permits interaction between these elements.

The services are for example represented by a block 214, which comprises software executing the real-time functionality. This may also be coupled to one or more hardware devices 216 including one or more hardware accelerators, one or more FPGAs (field programmable gate arrays) and/or one or more ASICs (application specific integrated circuits), such as DSPs (digital signal processors), GPUs (graphics processing units), etc. In some embodiments, the services may further comprise a virtual trusted platform module (vTPM), as described in more detail in US patent application published as US2012/0030676, and as described in the publication entitled "vTPM: Virtualizing the Trusted Platform Module", S. Berger et al., IBM research division, RC23879 (WO602-126) February 14, 2006.

A communication link 218 between the compartments 202, 204, for example between the hypervisor 206 and the operating system 210, is for example protected by a hardware partition, which provides access control between the compartments. For example, the hardware partition is implemented using a solution known in the art as the "ARM TrustZone" (the name ARM TrustZone may correspond to one or more registered trademarks). Such a solution is for example described in more detail in US patent application published as US20130031374.

The hardware partition present between the two environments provided by the compartments 202, 204 is for example implemented by using a set of system signals over a system bus to specify, for each transaction, the intended compartment. These signals are also for example used to specify the peripheral address space, such that the use of devices can be restricted to one of the components 202, 204. Additionally, each cache line could be tagged with an identifier associated with the compartment to be used.

Furthermore, communications between the compartments 202, 204 is for example made using a specific instruction set extension, which could be a single instruction or a set of instructions executed by a VM, causing a jump to be performed. Furthermore, data may be transferred between the two environments 202, 204 using a shared memory.

In some embodiments, shared memory accesses are rendered secure using a mandatory access control (MAC) technology such as SELinux, AppArmor, SMACK, etc.

In alternative embodiments, access control tags are used for the various hardware resources for implementing access control. For example, memory, memory mapped devices, and system bus messages of the compute node 102 include tags restricting access to these components. A further example of implementation of the hardware partition is for example described in PCT'951.

Thus the compute node of Figure 2 provides two distinct execution environments, the compartment 204 for example corresponding to a secure operating environment isolated from the normal operating environment of the compartment 202. While in some embodiments these two environments could run concurrently on a same core, in alternative embodiments, the RTOS and GPOS execution could be split between different cores. For example, one or more CPUs could execute the RTOS, and one or more further CPUs could execute the GPOS.

There is a technical difficulty in interrupt management for handling hardware peripheral events in a compute node such as the one of Figure 2. For example, peripheral events may include events triggered by timers, by hardware accelerators, by buses, etc. For example, a bus event is an interrupt, which flags that data has been received, for example in a receive FIFO (first-in-first-out) buffer of a UART (universal asynchronous receiver transmitter). In a dual-OS structure, it is assumed that only one software layer can be executed at once, if the execution occurs on a same core. However, an asynchronous event, such as an interrupt, dedicated to a specific layer, may occur while another layer is running.

Figure 3 schematically illustrates a hardware platform and software components of a compute node implementing first and second compartments (COMPARTMENT 1, COMPARTMENT 2), which are for example similar to the VM compartment and services compartment of Figure 2. For example, the virtual machines 208 in the VM compartment form part of a normal execution environment. The first compartment for example includes one or more applications (APPS) 302, and a host GPOS 306, which is for example the Linux operating system. The second compartment for example comprises critical applications (CRITICAL APPS) for example forming part of a secure execution environment, and the operating system 210 is for example a real-time operating system (RTOS) 310.

A secure monitor layer (SECURE MONITOR LAYER) 312 is for example the highest priority level within the software layers of the compute node, and provides a bridge between the first and second compartments. The secure monitor layer for example manages the various exceptions, such as interrupts, call and return operations, etc., in order to allow CPU resources to be shared between the different operating systems. The secure monitor layer 312 is for example capable of directly booting the RTOS 310, before launching the GPOS 306, and therefore allows timing issues of the RTOS boot to be resolved. The secure monitor layer is for example low level software having a small footprint, which can be certifiable. For example, in some embodiments, the RTOS 310 is certified as compliant with a certain standard, e.g. with ISO-26262, and the monitor layer is for example certified as being compliant with the same standard.

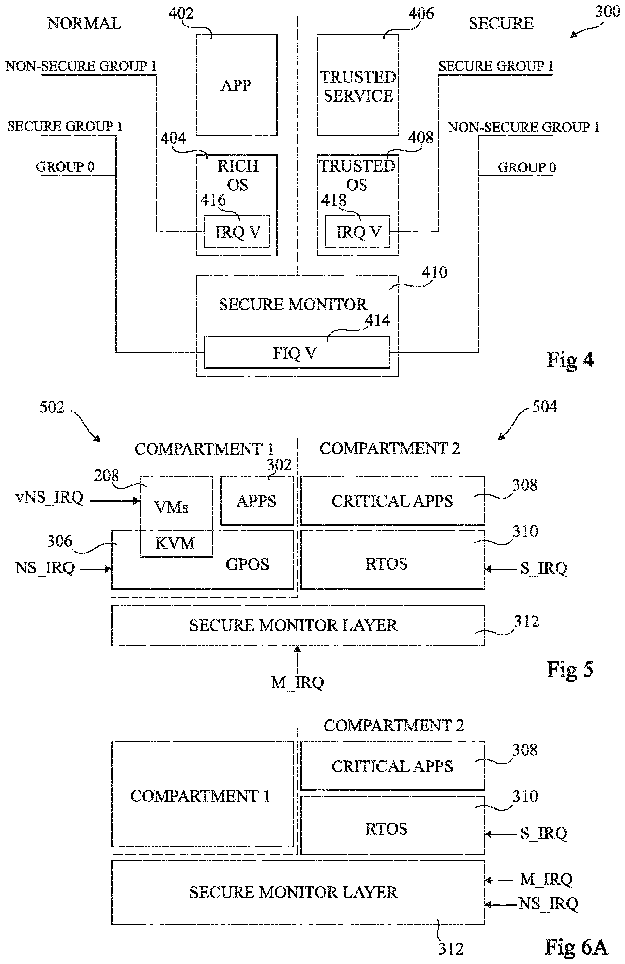

Figure 4 illustrates an example of interrupt routing according to an approach proposed in the document entitled "Programmable Interrupt Controllers: A New Architecture", E.McCann, ARM processors, 27 July 2015, available at the address https://community.arm.com/groups/processors/blog/2015/07/27/gicv 3-architecture. Figure 4 substantially reproduces a figure included in this document. A trusted OS implementation 400 comprises a normal environment (NORMAL) including an application (APP) 402 and a rich operating system (RICH OS), and a secure environment (SECURE) including a trusted service (TRUSTED SERVICE) 406 and a trusted operating system (TRUSTED OS) 408. A secure monitor (SECURE MONITOR) 410 is provided.

The implementation of Figure 4 defines three groups of interrupts:
- Group 0: interrupts are always secure and signalled as FIQ (fast interrupt request);
- Secure Group 1: interrupts are signalled as FIQ if the core is in a non-secure state, and as IRQ (interrupt request) if the core is in a secure state; and
- Non-secure Group 1: interrupts are signalled as FIQ if the core is in the secure state, and as IRQ if the core is in the non-secure state.

As represented in Figure 4, all FIQ interrupts are handled by the secure monitor, and in particular, the FIQ interrupts of group 0 (GROUP 0) and secure group 1 (SECURE GROUP 1) are provided to an FIQ vector 414 of the secure monitor 410. The IRQ interrupts are handled directly by the normal or secure environment. In particular, the IRQ interrupts of non-secure group 1 (NON-SECURE GROUP 1) are provided to an IRQ vector 416 of the rich OS 404, and the IRQ interrupts of secure group 1 (SECURE GROUP 1) are provided to an IRQ vector 418 of the trusted OS.

There are some drawbacks of the interrupt management scheme of Figure 4. For example, interrupts destined to the secure environment are routed to the IRQ vector 418 during the secure layer execution, meaning that benefits of FIQ are not used to improve performance during the interrupt handling, and timing constraints may not be met. Furthermore, FIQ interrupts are used for two situations, either because the interrupt is destined to the secure monitor 410, or because the interrupt targets a layer other than the one currently being executed. This implies that a software solution is needed in order to correctly handle FIQs based on the interrupt identifier, leading to an overhead during the interrupt management.

Figure 5 schematically illustrates interrupt routing in the software components of Figure 3 according to an example embodiment of the present disclosure. In the example of Figure 5, the dual-OS is composed of three main parts:
- a first compartment (COMPARTMENT 1) 502, which for example corresponds to the VM compartment 202 of Figure 2 and for example provides a normal execution environment, comprising a virtual layer formed of the virtual machines 208, the GPOS 306 and applications (APPS) 302;
- a second compartment (COMPARTMENT 2) 504, which for example corresponds to the services compartment 204 of Figure 2 and for example provides a secure execution environment, comprising the critical applications (CRITICAL APPS) and the RTOS 310; and
- a secure monitor layer 312 providing a bridge between the compartments 502 and 504. For example, the secure monitor layer 312 defines a shared memory area in order to enable data exchanges between the compartments 502 and 504.

The following five types of interrupts are for example defined:
M_IRQ: this type of interrupt is dedicated to the secure monitor layer 312. These interrupts are assigned the highest level of priority in the system as they can be used for example to define scheduling processes;
S_IRQ: this type of interrupt is destined for the compartment 504 in which real-time applications are for example executed, and thus this type of interrupt for example has low latency interrupt handling;
NS_IRQ: this type of interrupt is destined for the compartment 502, and corresponds to a standard interrupt available in most architectures;
vNS IRQ and vS IRQ: these types of interrupts are destined for virtual machines, and are directly routed to the corresponding virtual machine by the interrupt controller, thereby avoiding any additional latency introduced by the mediation of the hypervisor 206. Interrupts of type vNS_IRQ are destined for the virtual machines 208. Interrupts of the type vS_IRQ are destined for virtual machines implemented in the compartment 504. In the embodiments of Figures 2, 3 and 5, no such virtual machines are implemented, and thus interrupts of the type vS_IRQ could be omitted from the list of supported interrupt types. In alternative embodiments, one or more virtual machines could be implemented in the compartment 504, and benefit from this interrupt type.

Figure 6A schematically illustrates interrupt routing while the environment of compartment 502 is running. As illustrated, in this case, the interrupt S_IRQ is directly captured by the secure monitor layer 312, such that timing constraints of critical applications can be met. Interrupts NS IRQ or M_IRQ, respectively destined for the compartment 502 and the secure monitor layer 312, are routed to the secure monitor layer 312.

Interrupts of type M_IRQ are directly managed in the secure monitor layer 312.

Interrupts of type NS_IRQ are routed to the secure monitor layer 312 in order that a context switch can be implemented by the secure monitor layer 312 before forwarding the interrupt to the compartment 502. This for example involves saving the compartment 504 state and restoring the compartment 502 state, although in some embodiments described in more detail below this is not necessary.

The compartment 504, and in particular the RTOS 310, is for example capable of masking NS_IRQ interrupts so that these do not interfere with the running of real-time applications by the RTOS 310. As for the M_IRQ interrupts destined for the monitor layer, while the compartment 504 may be capable of masking some of these interrupts, at least one M_IRQ interrupt is for example unmaskable. This for example permits system recovery in the case that a crash occurs during the execution of an application by the RTOS 310, thereby allowing the secure monitor layer 312 to regain control.

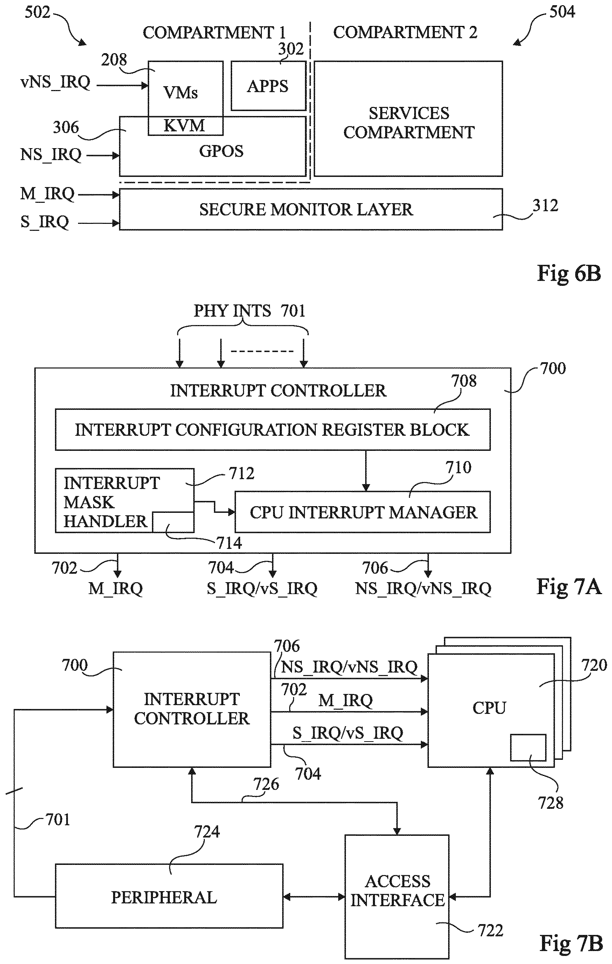

Figure 6B schematically illustrates interrupt routing while the environment of compartment 504 is running. As illustrated, in this case, the interrupt type NS_IRQ is directly captured by the compartment 502, for example by the GPOS 306. The interrupt type vNS_IRQ is directly captured by the corresponding virtual machine 208 to which it is destined, without mediation of the hypervisor. The S_IRQ and M_IRQ interrupt types, respectively destined for the compartment 504 and the secure monitor layer 312, are routed to the secure monitor layer 312. Indeed, interrupts of type M_IRQ are directly managed in the monitor layer 312. Interrupts of type S_IRQ are routed to the secure monitor layer 312 in order that a context switch can be implemented by the secure monitor layer 312 before forwarding the interrupt to the compartment 502. This for example involves saving the compartment 502 state and restoring the compartment 504 state, although in some embodiments described in more detail below this is not necessary. In some embodiments, the S_IRQ and/or M_IRQ interrupt types are unmaskable during execution of the compartment 502. This prevents critical operations performed by the compartment 504 from being masked from the compartment 502.

In some embodiments, while a CPU is executing operations of the secure monitor layer 312, all other interrupts are masked by default. Indeed, the monitor layer 312 is for example responsible for context switching between each of the compartments, providing communication between the compartments, including sharing information, providing a bridge for a service to be called from the other environment, etc., and also manages critical parts related to the overall system. These operations should be executed rapidly in order to reduce the impact on the responsiveness of each environment, especially for real-time applications running in the compartment 504.

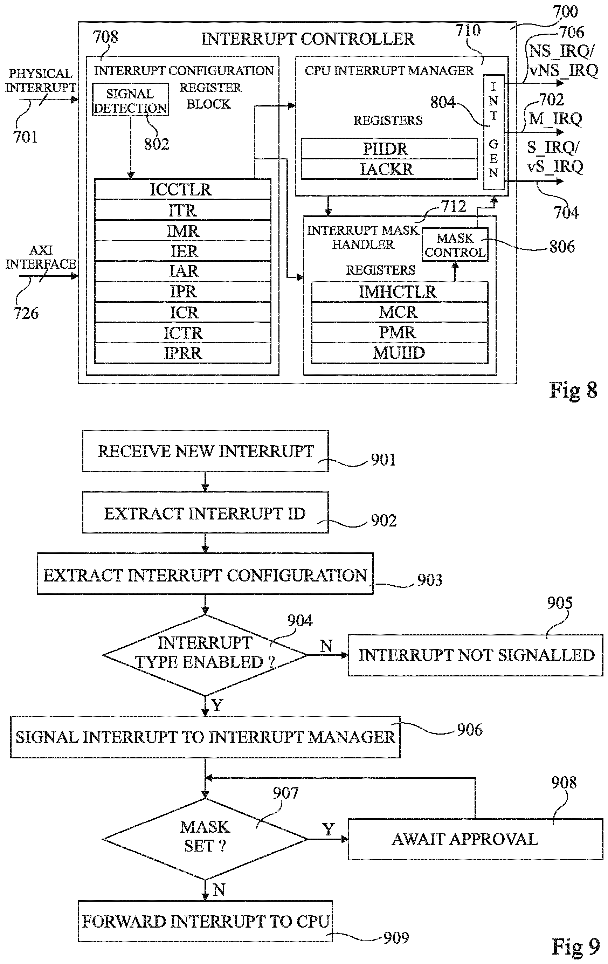

The routing of the various interrupt types during execution of the environments defined by the compartments 502, 504 is for example performed by an interrupt controller (not illustrated in Figures 6A and 6B) . An example of the interrupt controller will now be described in more detail with reference to Figures 7A to 7D and 8.

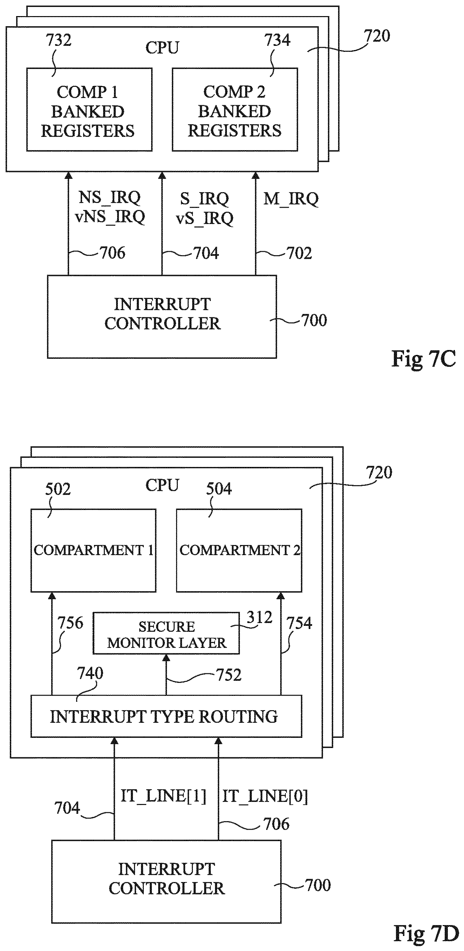

In some embodiments illustrated in Figures 7A, 7B and 7C, the three interrupt lines are provided to each CPU defining respectively the NS_IRQ/vNS_IRQ interrupts, the M_IRQ interrupt, and the S_IRQ/vS_IRQ interrupts. In alternative embodiments, these interrupts are provided on only two interrupt lines to each CPU, as illustrated in the example of Figure 7D.

Figure 7A schematically illustrates the interrupt controller (INTERRUPT CONTROLLER) 700. The controller 700 is for example a circuit that receives the physical interrupt lines (PHY INTS) 701 from peripheral devices or the like (not illustrated in Figure 7A), and generates, on three output lines 702, 704, 706, the corresponding interrupt types M_IRQ, S_IRQ/vS_IRQ and NS_IRQ/vNS_IRQ. In some embodiments, the interrupt controller 700 is implemented in hardware, for example by an ASIC (application specific integrated circuit) or FPGA (field programmable gate array). In alternative embodiments, the interrupt controller 700 could at least partially be implemented by software executed by a processing device.

The interrupt controller 700 for example comprises an interrupt configuration register block (INTERRUPT CONFIGURATION REGISTER BLOCK) 708, a CPU interrupt manager (CPU INTERRUPT MANAGER) 710, and an interrupt mask handler (INTERRUPT MASK HANDLER) 712. The interrupt controller 700 for example controls the type of interrupt, priority levels, destination state, the CPU that is targeted, interrupt masks and interrupt identifiers. These parameters are for example stored in the interrupt configuration register block 708, and for example permit all peripheral interrupts to be configured for the corresponding layers. The interrupt mask handler 712 for example defines the masks to be applied to certain types of interrupts. In some embodiments, the handler 712 is capable of accessing one or more parameters stored in a register 714 defining masking exceptions, as will be described in more detail below. The CPU interrupt manager 710 is configured to assert the interrupts that are not to be masked on the corresponding hardware lines 702, 704, 706.

In operation, when an external interrupt occurs, the CPU interrupt manager 710 for example forwards it to the CPU on the corresponding output line 702, 704, 706, as defined by the interrupt configuration register 708. In some cases, the interrupt mask handler 710 may prevent the interrupt transmission according to a mask request from one of the software layers and mask rules set by the monitor layer. For example, the mask rules specify which software layer is permitted to mask which interrupt types.

As indicated above, the interrupt controller 700 is for example capable of forcing an interrupt. For example, one or more specific M_IRQ interrupts are defined as unmaskable by writing the corresponding interrupt identifier as one of the parameters 714 accessible by the interrupt mask handler. Only the secure monitor layer 312 is for example capable of writing this parameter. Additionally or alternatively, any mask defined for S_IRQ and M_IRQ interrupt types are for example disabled during normal environment execution by one of the parameters 714 accessible by the interrupt mask handler 712. These parameters can for example only be set by the secure monitor layer 312.

The interrupt types vNS_IRQ and vS_IRQ destined for virtual machines are for example generated by the interrupt controller 700 without involving the hypervisor 206. In some embodiments, the virtual machines 208 are capable of configuring interrupts in the interrupt configuration register block 708 such that the interrupt controller 700 will route the interrupts using the virtual machine identifier. Thus the interrupt controller is for example able to generate an interrupt to the virtual machines without involving the hypervisor. For example, in some embodiments, the interrupt controller comprises a virtual interrupt table that is used to identify which interrupt is dedicated to which VM, and a virtual interrupt controller redistributor, directly accessible by the virtual machines, is used by the interrupt controller to read/write interrupts from/to the virtual machines. This virtual interrupt table is for example set by the hypervisor.

The control parameters of the interrupt controller 700 can for example be accessed and written to by the CPUs by read/write operations via an access interface. This for example involves memory mapping, to the address space of the registers of the interrupt controller 700 that store the relevant parameters, as will now be described in more detail with reference to Figure 7B.

Figure 7B schematically illustrates an example of the hardware involved in interrupt routing in the compute node of Figure 5. The interrupt lines 702, 704, 706 from the interrupt controller 700 are for example coupled to each CPU of a group comprising one or more CPUs 720.

An access interface (ACCESS INTERFACE) 722, which is for example an AXI (advanced extensible interface), is for example used for communications between the CPUs 720, the interrupt controller 700 and one or more peripheral devices (PERIPHERALS) 724. The access interface 722 is for example coupled to the interrupt controller via lines 726. The peripheral devices 724 for example provide the physical interrupts to the interrupt controller 700 on the lines 701.

The access interface 722 for example provides a memory-mapped interface between the CPUs 720 and the registers storing the control parameters of the interrupt controller 700, so that these registers form part of the addressable memory space of the CPUs.

As an alternative to the use of the access interface 722 for accessing the control parameters in the interrupt controller 700, a hardware solution could be provided allowing the CPUs 720 to directly access registers in the interrupt controller 700 storing the parameters, leading to reduced latency with respect to using read/write operations.

The access interface 722 for example further permits the interrupt controller 700 to be informed of the current operating state of the CPUs, i.e. whether the CPUs are executing in the environment of the compartment 502 or 504, or of the secure monitor layer 312.

When an interrupt occurs, the program counter of the CPUs 722 is redirected, using a CPU vector table, to the address of the corresponding interrupt handler in order to process the interrupt. The CPUs 720 for example comprise a CPU vector table 728 defining the following vectors:
M_IRQ vector: all interrupts defined as M_IRQ in the interrupt controller are routed to this vector;
S_IRQ/vS_IRQ vector: all interrupts set as S_IRQ/vS_IRQ in the interrupt controller will be routed to this vector. Interrupts of type vS_IRQ are also for example routed to this vector because the virtual machine is not aware that the interrupt is virtual, and so it is managed as a physical interrupt;
NS_IRQ/vNS_IRQ vector: all interrupts set as NS_IRQ/vNS_IRQ in the interrupt controller will be routed to this vector. Interrupts of type vNS_IRQ are also for example routed to this vector because the virtual machine is not aware that the interrupt is virtual, and so it is managed as a physical interrupt.

The CPU vector table may further define one or more other call and return operations related to the specific architecture.

Figure 7C schematically illustrates the CPUs 720 and interrupt controller 700 according to an example embodiment in which each of the CPUs 720 comprises a register bank (COMP1 BANKED REGISTER) 732 associated with the compartment 502, and a separate register bank (COMP2 BANKED REGISTER) 734 associated with the compartment 504. The registers of each bank 732, 734 for example include a plurality of system registers and a plurality of general purpose registers associated with the corresponding compartments. By providing the separate register banks 732, 734, a context switch between the environments of the compartments 502 and 504 can be performed without the need to perform save and restore operations of the register contents in the secure monitor layer 312. Indeed, the data associated with the compartment 502 can be maintained while the environment of the compartment 504 is running, and vice versa. Thus a context switch can be performed with low latency, the interrupt latency being only determined by the hardware interrupt propagation time.

There is for example no set of banked registers associated with the secure monitor layer, and thus the secure monitor layer for example performs save and restore operations on general purpose registers of the register bank 732 or 734 in order to preserve the compartment contexts before performing any computing operations.

For example, in operation, the compartment 502 may be running using the banked registers 732. An S_IRQ interrupt for example occurs, which interrupts the compartment 502 execution. The CPU context is for example changed by activating the compartment 504 banked registers 734 in order that the interrupt be forwarded to the compartment 504.

In some embodiments, the secure monitor layer 312 may perform the role of a bridge for a service called from one of the compartments and performed in the other compartment. For example, the service request is generated using a specific instruction set extension executed by one compartment, and causing a jump to the secure monitor layer 312. For example, the secure monitor layer 312 is then used to transfer arguments contained in the CPU banked registers of the compartment that called the service to the CPU banked registers of the compartment that is to perform the service. The CPU banked registers executed by the CPU are thus for example changed in order to hand control to the compartment that is to perform the service, for example using a specific instruction set extension called by the secure monitor layer 312. In some embodiments, this instruction can however be called directly by one of the compartments 502, 504, in order to avoid controlling the secure monitor layer 312 with additional operations. For example, this instruction can be called to return control to a compartment once the other compartment has finished performing an operation.

Figure 7D schematically illustrates the CPUs 720 and interrupt controller 700 according to an example embodiment in which, rather than there being three interrupt lines 702, 704, 706 between the interrupt controller and the CPUs 720, there are just two interrupt lines IT_LINE[1] and IT_LINE[0], these lines for example corresponding to the lines 704 and 706 of Figures 7A to 7C. The three types of interrupt supplied on the three lines 702 to 706 are for example encoded onto the two lines 704, 706 using the scheme indicated in the following table:

| IT_LINE[1] | IT_LINE[0] | Description |
|---|---|---|
| 0 | 0 | No interrupt |
| 0 | 1 | Compartment 502 interrupt (v)N IRQ |
| 1 | 0 | Compartment 504 interrupt (v)S IRQ |
| 1 | 1 | Monitor interrupt M IRQ |

Of course, the above table provides just one example of an encoding scheme that could be used, and it will be apparent to those skilled in the art that many different schemes would be possible.

Each of the CPUs 720 for example comprises an interrupt type routing (INTERRUPT TYPE ROUTING) module 740 configured to convert the signal received on the lines 704, 706 into the corresponding interrupt. For example, the interrupt M_IRQ is applied on an output line 752 of the module 740 coupled to the secure monitor layer 312, the interrupt S_IRQ or vS_IRQ is applied on an output line 754 of the module 740 coupled to the compartment 504, and the interrupt NS_IRQ or vNS_IRQ is applied on an output line 756 of the module 740 coupled to the compartment 502. In operation, the module 740 for example detects when a high level is present on either of the lines IT_LINE[0] and IT_LINE[1], and if a high level is detected on one of these lines, the state of the other line is also detected in order to determine which of the three interrupt types is being asserted. The module 740 then for example stops the current execution in order to forward the interrupt to the software layer corresponding to the type of interrupt.

In some embodiments, the interrupt controller 700 is configured to support both the three wire interrupt protocol described with reference to Figures 7A to 7C, and the two wire interrupt protocol described with reference to Figure 7D. For example, when the two line protocol of Figure 7D is applied, the line 702 remains unused, and the lines 704 and 706 normally used for the S_IRQ and NS_IRQ interrupts respectively are used to implement the two line protocol. The selection between the three wire and two wire protocols is for example made via a configuration register of the interrupt controller 700, and can for example be set during platform setup by the secure monitor layer 312.

Figure 8 schematically illustrates the interrupt controller 700 in more detail according to an example embodiment.

The interrupt configuration register block 708 for example defines all registers related to interrupt properties. In the example of Figure 8, these registers include:
- an interrupt configuration control register (ICCTLR) for controlling interrupt activation and the access rules for modifying the interrupt configuration;
- interrupt type registers (ITR) each indicating, for a given interrupt identifier, whether the corresponding interrupt is secure or non-secure;
- interrupt monitor registers (IMR) each indicating, for a given interrupt identifier, whether or not the corresponding interrupt is reserved for the secure monitor layer;
- interrupt enable registers (IER) each indicating, for a given interrupt identifier, whether or not forwarding of the corresponding interrupt type to the CPU interrupt manager is enabled;
- interrupt active registers (IAR) each indicating, for a given interrupt identifier, the presence or absence of an active interrupt signal for the corresponding interrupt;
- interrupt pending registers (IPR) each indicating, for a given interrupt identifier, whether the corresponding interrupt is pending, in other words that the corresponding interrupt has been triggered by the interrupt controller 700 but not yet handled by the CPU;
- interrupt configuration registers (ICR) each indicating, for a given interrupt identifier, whether the corresponding interrupt is edge-triggered or level-sensitive;
- interrupt core target registers (ICTR) each indicating, for a given interrupt identifier, a CPU target for the interrupt defining a list of target processors for the interrupt, wherein the CPU target is for example defined as an 8-bit value; and
- interrupt priority registers (IPRR) each indicating, for a given interrupt identifier, a priority level of the corresponding interrupt, for example in the form of a 4-bit value.

The interrupt configuration register 708 further comprises a signal detection block 802 adapted to detect the arrival of a new interrupt on one of the physical interrupt lines 701, to extract an identifier of the interrupt mapped to the particular entry line on which the interrupt is received, and to use this identifier to consult the registers of the interrupt configuration register 708. For example, the interrupt configuration register 708 includes an indication of the hardware interrupt assignment indicating the interrupt identifier associated with each entry line.

The CPU interrupt manager 710 for example comprises a pending interrupt identification register (PIIDR) providing a read-only location indicating the interrupt identifier of the highest priority that is pending on the CPU interface. A read operation to this register for example changes the status of the interrupt from pending to active, and thus for example causes a corresponding bit in the interrupt pending register to be cleared, and a corresponding bit in the interrupt active register to be enabled.

The CPU interrupt manager 710 also for example comprises an interrupt acknowledge register (IACKR) providing a write-only location that clears the interrupt request associated with a selected interrupt. For example, writing 1 to a bit in the IACKR clears the corresponding bit in the interrupt active register IAK of the interrupt configuration register block 708, and also clears the bit that was just written to the IACKR.

The CPU interrupt manager 710 further comprises an interrupt generation circuit 804, which is adapted to assert an interrupt signal on the appropriate output line 702, 704 or 706, or on the two lines 704 and 706 in the case that the two-wire protocol of Figure 7D is implemented.

The interrupt mask handler 712 for example comprises the following registers:
- an interrupt mask handler control register (IMHCTLR), which for example permits mask policies to be defined during compartment 502/compartment 504 environment execution. For example, one or more bits of this register define whether or not a monitor unmaskable interrupt is enabled. The monitor unmaskable interrupt is an interrupt dedicated to the monitor layer interrupt M_IRQ, which is defined as unmaskable. A further one or more bits of this register for example define whether or not a secure interrupt mask can be applied from the environment of compartment 502. Yet a further one or more bits of this register for example define whether or not the masking of monitor interrupts is restricted to being performed by the monitor layer;
- a mask control register (MCR) for example comprises one or more bits indicating whether or not all M_IRQ interrupts are masked, one or more bits indicating whether or not all S_IRQ interrupts are masked, and one or more bits indicating whether or not all NS_IRQ interrupts are masked. Depending on the CPU state, a write operation to this register to mask a specific interrupt type may be ignored based on the masking policy defined in the IMHCTLR register;
- a priority mask register (PMR) for example provides an interrupt priority filter. For example this register stores a threshold priority level, and only interrupts with a priority level above this threshold are signalled to the CPUs; and
- a monitor unmaskable interrupt ID (MUIID) for example contains the identifier of one or more interrupts defined as being unmaskable. The one or more interrupts defined in this register are for example restricted to being those that are reserved for the monitor layer.

The interrupt mask handler 712 also for example comprises a mask control block (MASK CONTROL) 806, which is for example configured to apply the masks in the CPU interrupt manager 710. The mask control block 806 is for example capable of authorizing or preventing interrupt generation by setting a signal supplied to the interrupt generator to a high or low state.

Figure 9 is a flow diagram illustrating operations in a method of interrupt management according to an example embodiment of the present disclosure. The operations of this method are for example performed by hardware and/or software of the interrupt controller 700.

In an operation 901, a new interrupt is received by the interrupt controller 700 on one of the input lines 701.

In an operation 902, the interrupt identifier is extracted, based on the entry line of the interrupt.

In an operation 903, the interrupt configuration, including the interrupt type, is for example extracted based on the interrupt identifier. For example, the interrupt configuration register performs this task by consulting the interrupt type register and the interrupt monitor register.

In an operation 904, it is determined whether or not the interrupt type has been enabled, and not masked, for the current execution state. If it is not enabled, in an operation 905, the interrupt is not signalled to the CPU interrupt manager block 710. If no mask has been applied, the next operation is 906.

In operation 906, the interrupt is signalled to the CPU interrupt manager block 710, and then in an operation 907, it is determined whether or not a mask has been set. If so, the next operation is 908, in which the interrupt generator 804 waits for approval, and the method for example returns to operation 907. When the mask is no longer set, the next operation is 909, in which the interrupt is generated by the interrupt generator and forwarded on the corresponding interrupt line 702, 704 or 706 to one or more of the CPUs.

An advantage of the embodiments described herein is that, by providing a monitor interrupt type, such an interrupt can be handled in a time efficient manner, and can be protected from being masked from another execution level. Furthermore, by providing interrupt types dedicated to the environments of the different compartments, which are for example normal and secure execution environments respectively, these interrupts can be processed directly by the relevant environments when the processing device is executing in the corresponding environment, leading to low latency processing of these interrupts.

Having thus described at least one illustrative embodiment, various alterations, modifications and improvements will readily occur to those skilled in the art. For example, it will be apparent to those skilled in the art that the example of the registers forming the various components of the interrupt controller of Figure 8 provide just one example, and that in alternative embodiments some of these registers could be omitted, or additional registers provided.

Furthermore, it will be apparent to those skilled in the art that the various features described in relation to the various embodiments could be combined, in alternative embodiments, in any combination. For example, the two-wire protocol described in relation with Figure 7D could be implemented in the other embodiments.

## Claims

1. A compute node comprising:
one or more processors (720);
one or more memory devices storing software enabling virtual processing resources of the one or more processors (720) and virtual memory to be assigned to support:
- a first operating environment (502) supporting a first operating system and one or more virtual machines;
- a second operating environment (504) supporting a real-time operating system (310); and
- a secure monitor layer (312) providing a bridge between the first and second operating environments; and
an interrupt controller (700) configured to provide an interface between a plurality of physical interrupt lines from one or more peripheral devices and at least two interrupt inputs (702, 704, 706) of each of the one or more processors, **characterized in that** the interrupt controller (700) is configured to generate, on the at least two interrupt inputs:
interrupts of a first type (NS_IRQ/vNS_IRQ) destined for the first operating environment (502);
interrupts of a second type (S_IRQ/vS_IRQ) destined for the second operating environment (504); and
interrupts of a third type (M_IRQ) destined for the secure monitor layer (310).

2. The compute node of claim 1, wherein the one or more processors (720) comprise:
a first banked register (732) comprising a plurality of system registers and a plurality of general purpose registers associated with the first operating environment; and
a second banked register (734) comprising a plurality of system registers and a plurality of general purpose registers associated with the second operating environment.

3. The compute node of claim 2, wherein the secure monitor layer (312) is configured to implement a transition from the first operating environment to the second operating environment by activating the second banked register (734), and to perform a transition from the second operating environment to the first operating environment by activating the first banked register (732).

4. The compute node of claim 3, wherein the transition from the first operating environment to the second operating environment, by activating the second banked register (734), is performed in response to an interrupt event of the second type (S_IRQ) and the transition from the second operating environment to the first operating environment, by activating the first banked register (732), is performed in response to an interrupt event of the first type (NS_IRQ).

5. The compute node of any of claims 1 to 4, wherein the interrupt controller (700) is configured to provide an interface between a plurality of physical interrupt lines from one or more peripheral devices and three interrupt inputs (702, 704, 706) of the one or more processors.

6. The compute node of claim 5, wherein:
the interrupts of the first type (NS_IRQ/vNS_IRQ) are provided on a first of the interrupt inputs (706);
the interrupts of the second type (S_IRQ/vS_IRQ) are provided on a second of the interrupt inputs (704); and
the interrupts of the third type (M_IRQ) are provided on a third of the interrupt inputs.

7. The compute node of any of claims 1 to 4, wherein the interrupt controller (700) is configured to encode the interrupts of the first, second and third types on first and second interrupt inputs of the one or more processors (720).

8. The compute node of claim 7, wherein the interrupt controller (700) is configured to generate:
the interrupt of the first type by applying a first voltage state to the first interrupt input and a second voltage state to the second interrupt input;
the interrupt of the second type by applying the second voltage state to the first interrupt input and the first voltage state to the second interrupt input; and
the interrupt of the third type by applying the first or second voltage state to both of the first and second interrupt inputs.

9. The compute node of any of claims 1 to 8, wherein the interrupt controller is configured to selectively mask interrupts of at least one of the first, second and third interrupt type.

10. A method of routing interrupts comprising:
receiving interrupts by an interrupt controller (700) of a compute node comprising: one or more processors (720); one or more memory devices storing software enabling processing resources of the one or more processors (720) and memory to be assigned to support: a first operating environment (502) supporting a first operating system and one or more virtual machines; a second operating environment (504) supporting a real-time operating system (310); and a secure monitor layer (312) providing a bridge between the first and second operating environments; and
generating by the interrupt controller (700) interrupts on at least two interrupt inputs of each of the one or more processors (720), the interrupts comprising:
interrupts of a first type (NS_IRQ/vNS_IRQ) destined for the first operating environment (502);
interrupts of a second type (S_IRQ/vS_IRQ) destined for the second operating environment (504); and
interrupts of a third type (M_IRQ) destined for the secure monitor layer (310).

11. The method of claim 10, wherein:
the interrupts of the first type (NS_IRQ/vNS_IRQ) are provided by the interrupt controller (700) on a first of the interrupt inputs (706);
the interrupts of the second type (S_IRQ/vS_IRQ) are provided by the interrupt controller (700) on a second of the interrupt inputs (704); and
the interrupts of the third type (M_IRQ) are provided by the interrupt controller (700) on a third of the interrupt inputs.

12. The method of claim 10, comprising encoding, by the interrupt controller (700), the interrupts of the first, second and third types on first and second interrupt inputs of the one or more processors (720).

13. The method of claim 12, wherein encoding the interrupts of the first, second and third types on the first and second interrupt inputs comprises generating:
the interrupt of the first type by applying a first voltage state to the first interrupt input and a second voltage state to the second interrupt input;
the interrupt of the second type by applying the second voltage state to the first interrupt input and the first voltage state to the second interrupt input; and
the interrupt of the third type by applying the first or second voltage state to both of the first and second interrupt inputs.

14. The method of any of claims 10 to 13, further comprising defining, by the interrupt controller, at least one interrupt of the third type as being unmaskable.

15. A computer readable medium storing computing instructions adapted to implement, when executed by a processing device, the method of any of claims 10 to 14.

## Patentansprüche

1. Rechenknoten, der Folgendes aufweist:
einen oder mehrere Prozessoren (720);
eine oder mehrere Speichervorrichtungen, die Software speichern, wodurch virtuelle Verarbeitungsressourcen des einen oder der mehreren Prozessoren (720) und des virtuellen Speichers zugewiesen werden können zur Unterstützung:
- einer ersten Betriebsumgebung (502), die ein erstes Betriebssystem und eine oder mehrere virtuelle Maschinen unterstützt;
- einer zweiten Betriebsumgebung (504), die ein Echtzeitbetriebssystem (310) unterstützt; und
- einer sicheren Überwachungsschicht (312), die eine Brücke zwischen der ersten und der zweiten Betriebsumgebung vorsieht; und
eine Interrupt-bzw. Unterbrechungs-Steuerung (700), die so konfiguriert ist, dass sie eine Schnittstelle zwischen einer Vielzahl von physischen Interrupt-Leitungen von einem oder mehreren Peripheriegeräten und wenigstens zwei Interrupt-Eingängen (702, 704, 706) des einen oder der mehreren Prozessoren vorsieht, **dadurch gekennzeichnet, dass** die Interrupt-Steuerung (700) konfiguriert ist an den wenigstens zwei Interrupt-Eingängen zum Erzeugen von:
Interrupts eines ersten Typs (NS_IRQ/vNS_IRQ), die für die erste Betriebsumgebung (502) bestimmt sind;
Interrupts eines zweiten Typs (S_IRQ/vS_IRQ), die für die zweite Betriebsumgebung (504) bestimmt sind; und
Interrupts eines dritten Typs (M_IRQ), die für die sichere Überwachungsschicht (310) bestimmt sind.

2. Rechenknoten nach Anspruch 1, wobei der eine oder die mehreren Prozessoren (720) Folgendes aufweisen:
ein erstes Bankregister (732), das eine Vielzahl von Systemregistern und eine Vielzahl von Mehrzweckregistern aufweist, die mit der ersten Betriebsumgebung assoziiert sind; und
ein zweites Bankregister (734), das eine Vielzahl von Systemregistern und eine Vielzahl von Mehrzweckregistern aufweist, die mit der zweiten Betriebsumgebung assoziiert sind.

3. Rechenknoten nach Anspruch 2, wobei die sichere Überwachungsschicht (312) konfiguriert ist, um einen Übergang von der ersten Betriebsumgebung zu der zweiten Betriebsumgebung durch Aktivieren des zweiten Bankregisters (734) zu implementieren und einen Übergang von der zweiten Betriebsumgebung zu der ersten Betriebsumgebung durch Aktivieren des ersten Bankregisters (732) durchzuführen.

4. Rechenknoten nach Anspruch 3, wobei der Übergang von der ersten Betriebsumgebung zu der zweiten Betriebsumgebung durch Aktivieren des zweiten Bankregisters (734) ansprechend auf ein Interrupt-Ereignis des zweiten Typs (S_IRQ) durchgeführt wird und der Übergang von der zweiten Betriebsumgebung zu der ersten Betriebsumgebung durch Aktivieren des ersten Bankregisters (732) ansprechend auf ein Interrupt-Ereignis des ersten Typs (NS_IRQ) durchgeführt wird.

5. Rechenknoten nach einem der Ansprüche 1 bis 4, wobei die Interrupt-Steuerung (700) konfiguriert ist, um eine Schnittstelle zwischen einer Vielzahl von physischen Interrupt-Leitungen von einem oder mehreren Peripheriegeräten und drei Interrupt-Eingängen (702, 704, 706) des einen oder der mehreren Prozessoren vorzusehen.

6. Rechenknoten nach Anspruch 5, wobei:
die Interrupts des ersten Typs (NS_IRQ/vNS_IRQ) an einem ersten der Interrupt-Eingänge (706) vorgesehen werden;
die Interrupts des zweiten Typs (S_IRQ/vS_IRQ) an einem zweiten der Interupt-Eingänge (704) vorgesehen werden; und
die Interrupts des dritten Typs (M_IRQ) an einem dritten der Interrupt-Eingänge vorgesehen werden.

7. Rechenknoten nach einem der Ansprüche 1 bis 4, wobei die Interrupt-Steuerung (700) konfiguriert ist, um die Interrupts des ersten, zweiten und dritten Typs an ersten und zweiten Interrupt-Eingängen des einen oder der mehreren Prozessoren (720) zu kodieren.

8. Rechenknoten nach Anspruch 7, wobei die Interrupt-Steuerung (700) konfiguriert ist zum Erzeugen:
des Interrupts des ersten Typs durch Anlegen eines ersten Spannungszustands an den ersten Interrupt-Eingang und eines zweiten Spannungszustands an den zweiten Interrupt-Eingang;
des Interrupts des zweiten Typs durch Anlegen des zweiten Spannungszustands an den ersten Interrupt-Eingang und des ersten Spannungszustands an den zweiten Interrupt-Eingang; und
des Interrupts des dritten Typs durch Anlegen des ersten oder des zweiten Spannungszustands sowohl an die ersten und zweiten Interrupt-Eingänge.

9. Rechenknoten nach einem der Ansprüche 1 bis 8, wobei die Interrupt-Steuerung konfiguriert ist, um Interrupts des ersten, zweiten und dritten Interrupt-Typs selektiv zu maskieren.

10. Verfahren zum Routen von Interrupts, das Folgendes aufweist:
Empfangen von Interrupts durch eine Interrupt-Steuerung (700) eines Rechenknotens, das Folgendes aufweist: einen oder mehrere Prozessoren (720); eine oder mehrere Speichervorrichtungen, die Software speichern, welche es ermöglichen, dass Verarbeitungsressourcen des einen oder der mehreren Prozessoren (720) und des Speichers zugewiesen werden können zur Unterstützung: einer ersten Betriebsumgebung (502), die ein erstes Betriebssystem und eine oder mehrere virtuelle Maschinen unterstützt; einer zweiten Betriebsumgebung (504), die ein Echtzeitbetriebssystem (310) unterstützt; und einer sicheren Überwachungsschicht (312), die eine Brücke zwischen der ersten und der zweiten Betriebsumgebung vorsieht; und
Erzeugen von Interrupts an wenigstens zwei Interrupt-Eingängen des einen oder der mehreren Prozessoren (720) durch die Interrupt-Steuerung (700), wobei die Interrupts Folgendes aufweisen:
Interrupts eines ersten Typs (NS_IRQ/vNS_IRQ), die für die erste Betriebsumgebung (502) bestimmt sind;
Interrupts eines zweiten Typs (S_IRQ/vS_IRQ), die für die zweite Betriebsumgebung (504) bestimmt sind; und
Interrupts eines dritten Typs (M_IRQ), die für die sichere Überwachungsschicht (310) bestimmt sind.

11. Verfahren nach Anspruch 10, wobei:
die Interrupts des ersten Typs (NS_IRQ/vNS_IRQ) von der Interrupt-Steuerung (700) an einem ersten der Interrupt-Eingänge (706) vorgesehen werden;
die Interrupts des zweiten Typs (S_IRQ/vS_IRQ) von der Interrupt-Steuerung (700) an einem zweiten der Interrupt-Eingänge (704) vorgesehen werden; und
die Interrupts des dritten Typs (M_IRQ) von der Interrupt-Steuerung (700) an einem dritten der Interrupt-Eingänge vorgesehen werden.

12. Verfahren nach Anspruch 10, dass das Kodieren der Interrupts des ersten, zweiten und dritten Typs an den ersten und zweiten Interrupt-Eingängen des einen oder der mehreren Prozessoren (720) durch die Interrupt-Steuerung (700) aufweist.

13. Verfahren nach Anspruch 12, wobei das Kodieren der Interrupts des ersten, zweiten und dritten Typs an den ersten und zweiten Interrupt-Eingängen das Erzeugen:
des Interrupts des ersten Typs durch Anlegen eines ersten Spannungszustands an den ersten Interrupt-Eingang und eines zweiten Spannungszustands an den zweiten Interrupt-Eingang aufweist;
des Interrupts des zweiten Typs durch Anlegen des zweiten Spannungszustands an den ersten Interrupt-Eingang und des ersten Spannungszustands an den zweiten Interrupt-Eingang aufweist; und
des Interrupts des dritten Typs durch Anlegen des ersten oder zweiten Spannungszustands sowohl an die ersten und zweiten Interrupt-Eingänge aufweist.

14. Verfahren nach einem der Ansprüche 10 bis 13, das ferner das Definieren von wenigstens einem Interrupt des dritten Typs durch die Interrupt-Steuerung als nicht maskierbar aufweist.

15. Computerlesbares Medium, das Berechnungsanweisungen speichert, die geeignet sind, das Verfahren nach einem der Ansprüche 10 bis 14 zu implementieren, wenn es von einer Verarbeitungsvorrichtung ausgeführt wird.

## Revendications

1. Noeud de calcul, comprenant :
un ou plusieurs processeurs (720) ;
un ou plusieurs dispositifs mémoire mémorisant du logiciel permettant à des ressources de traitement desdits un ou plusieurs processeurs (720) et à de la mémoire virtuelle d'être affectées pour prendre en charge :
- un premier environnement de fonctionnement (502) supportant un premier système d'exploitation et une ou plusieurs machines virtuelles ;
- un deuxième environnement de fonctionnement (504) supportant un système d'exploitation en temps réel (310) ; et
- une couche de surveillance sécurisée (312) assurant un pont entre les premier et deuxième environnements de fonctionnement ; et
un contrôleur d'interruptions (700) agencé pour assurer une interface entre une pluralité de lignes d'interruption physiques provenant d'un ou plusieurs dispositifs périphériques et au moins deux entrées d'interruption (702, 704, 706) de chacun desdits un ou plusieurs processeurs, **caractérisé en ce que** le contrôleur d'interruptions (700) est agencé pour générer, sur lesdites au moins deux entrées d'interruption :
des interruptions d'un premier type (NS_IRQ/vNS_IRQ) destinées au premier environnement de fonctionnement (502) ;
des interruptions d'un deuxième type (S_IRQ/vS_IRQ) destinées au deuxième environnement de fonctionnement (504) ; et
des interruptions d'un troisième type (M_IRQ) destinées à la couche de surveillance sécurisée (310).

2. Noeud de calcul selon la revendication 1, dans lequel lesdits un ou plusieurs processeurs (720) comprennent :
un premier registre de banc de registres (732) comprenant une pluralité de registres système et une pluralité de registres d'usage général associés au premier environnement de fonctionnement ; et
un deuxième registre de banc de registres (734) comprenant une pluralité de registres système et une pluralité de registres d'usage général associés au deuxième environnement de fonctionnement.

3. Noeud de calcul selon la revendication 2, dans lequel la couche de surveillance sécurisée (312) est agencée pour mettre en oeuvre une transition à partir du premier environnement de fonctionnement vers le deuxième environnement de fonctionnement en activant le deuxième registre de banc de registres (734), et pour réaliser une transition du deuxième environnement de fonctionnement vers le premier environnement de fonctionnement en activant le premier registre de banc de registres (732).

4. Noeud de calcul selon la revendication 3, dans lequel la transition du premier environnement de fonctionnement vers le deuxième environnement de fonctionnement, en activant le deuxième registre de banc de registres (734), est réalisée en réponse à un événement d'interruption du deuxième type (S_IRQ) et la transition du deuxième environnement de fonctionnement vers le premier environnement de fonctionnement, en activant le premier registre de banc de registres (732), est réalisée en réponse à un événement d'interruption du premier type (NS_IRQ).

5. Noeud de calcul selon l'une quelconque des revendications 1 à 4, dans lequel le contrôleur d'interruptions (700) est agencé pour assurer une interface entre une pluralité de lignes d'interruption physiques provenant d'un ou plusieurs dispositifs périphériques et trois entrées d'interruption (702, 704, 706) desdits un ou plusieurs processeurs.

6. Noeud de calcul selon la revendication 5, dans lequel :
les interruptions du premier type (NS_IRQ/vNS_IRQ) sont fournies sur une première des entrées d'interruption (706) ;
les interruptions du deuxième type (S_IRQ/vS_IRQ) sont fournies sur une deuxième des entrées d'interruption (704) ; et
les interruptions du troisième type (M_IRQ) sont fournies sur une troisième des entrées d'interruption.

7. Noeud de calcul selon l'une quelconque des revendications 1 à 4, dans lequel le contrôleur d'interruptions (700) est agencé pour coder les interruptions des premier, deuxième et troisième types sur des première et deuxième entrées d'interruption desdits un ou plusieurs processeurs (720).

8. Noeud de calcul selon la revendication 7, dans lequel le contrôleur d'interruptions (700) est agencé pour générer :
l'interruption du premier type en appliquant un premier état de tension à la première entrée d'interruption et un deuxième état de tension à la deuxième entrée d'interruption ;
l'interruption du deuxième type en appliquant le deuxième état de tension à la première entrée d'interruption et le premier état de tension à la deuxième entrée d'interruption ; et
l'interruption du troisième type en appliquant le premier ou le deuxième état de tension à la fois aux première et deuxième entrées d'interruption.

9. Noeud de calcul selon l'une quelconque des revendications 1 à 8, dans lequel le contrôleur d'interruptions est agencé pour masquer sélectivement des interruptions d'au moins l'un du premier, du deuxième et du troisième type d'interruption.

10. Procédé de routage d'interruption, comprenant :
recevoir des interruptions par un contrôleur d'interruptions (700) d'un noeud de calcul comprenant : un ou plusieurs processeurs (720) ; un ou plusieurs dispositifs mémoire mémorisant du logiciel permettant à des ressources de traitement desdits un ou plusieurs processeurs (720) et à de la mémoire d'être affectées pour prendre en charge : un premier environnement de fonctionnement (502) supportant un premier système d'exploitation et une ou plusieurs machines virtuelles ; un deuxième environnement de fonctionnement (504) supportant un système d'exploitation en temps réel (310) ; et une couche de surveillance sécurisée (312) assurant un pont entre les premier et deuxième environnements de fonctionnement ; et
générer, par le contrôleur d'interruptions (700), des interruptions sur au moins deux entrées d'interruption de chacun desdits un ou plusieurs processeurs (720), les interruptions comprenant :
des interruptions d'un premier type (NS_IRQ/vNS_IRQ) destinées au premier environnement de fonctionnement (502) ;
des interruptions d'un deuxième type (S_IRQ/vS_IRQ) destinées au deuxième environnement de fonctionnement (504) ; et
des interruptions d'un troisième type (M_IRQ) destinées à la couche de surveillance sécurisée (310).

11. Procédé selon la revendication 10, dans lequel :
les interruptions du premier type (NS_IRQ/vNS_IRQ) sont fournies par le contrôleur d'interruptions (700) sur une première des entrées d'interruption (706) ;
les interruptions du deuxième type (S_IRQ/vS_IRQ) sont fournies par le contrôleur d'interruptions (700) sur une deuxième des entrées d'interruption (704) ; et
les interruptions du troisième type (M_IRQ) sont fournies par le contrôleur d'interruptions (700) sur une troisième des entrées d'interruption.

12. Procédé selon la revendication 10, comprenant un codage, par le contrôleur d'interruptions (700), des interruptions des premier, deuxième et troisième types sur des première et deuxième entrées desdits un ou plusieurs processeurs (720).

13. Procédé selon la revendication 12, dans lequel le codage des interruptions des premier, deuxième et troisième types sur les première et deuxième entrées d'interruption comprend la génération de :
l'interruption du premier type en appliquant un premier état de tension à la première entrée d'interruption et un deuxième état de tension à la deuxième entrée d'interruption ;
l'interruption du deuxième type en appliquant le deuxième état de tension à la première entrée d'interruption et le premier état de tension à la deuxième entrée d'interruption ; et
l'interruption du troisième type en appliquant le premier ou le deuxième état de tension à la fois aux première et deuxième entrées d'interruption.

14. Procédé selon l'une quelconque des revendications 10 à 13, comprenant en outre la définition, par le contrôleur d'interruptions, d'au moins une interruption du troisième type comme étant non masquable.

15. Support lisible par un ordinateur mémorisant des instructions informatiques adaptées à mettre en oeuvre, lorsqu'elles sont exécutées par un dispositif de traitement, le procédé de l'une quelconque des revendications 10 à 14.
